# EUROPEAN PATENT APPLICATION

(11) **EP 1 839 738 A1**
(43) Date of publication of application: **03.10.2007**
(21) Application number: 07006539.6
(22) Date of filing: 29.03.2007
(51) Int. Cl.: B01J 19/00, B01F 13/00

(54) **Fluid manipulating method for microscale scientific devices and microscale scientific device**

(30) Priority: 31.03.2006 JP 2006100300
(71) Applicant: FUJIFILM Corporation, Minato-ku Tokyo (JP)
(72) Inventor: Ueyama, Tomohide, Minami-Ashigari-shi Kanagawa (JP); Nagasawa, Hideharu, Minami-Ashigari-shi Kanagawa (JP); Ichikawa, Yasunori, Minami-Ashigari-shi Kanagawa (JP)
(74) Representative: HOFFMANN EITLE

(57) **Abstract**

According to the fluid manipulating method of an aspect of the present invention, since the fluids (L1, L2) can be rectified early by increasing the pressure loss of each, the rectifying area before the joining of the plurality of kinds of fluids can be shortened. Therefore, a plurality of kinds of fluids(L1, L2) can be uniformly reacted or mixed with one another in a stable multiple laminar flow state, and the size of devices (10, 50) can be reduced with the range of applicable flow rates expanded.

## Description

### BACKGROUND OF THE INVENTION

### Field of the Invention

The present invention relates to a fluid manipulating method for microscale scientific devices and a microscale scientific device, and more particularly to a fluid manipulating method for microscale scientific devices by which a plurality of kinds of fluids are reacted or mixed with one another by stably forming laminar flows and such a microscale scientific device.

### Description of the Related Art

Since the surface area per unit volume expands in a micro space, more reactive interfaces of reaction fluids can be formed and temperature control is also easier. Therefore, this tendency is attracting note as promising possibilities for enhancing the efficiency or velocity of reaction and mixing among fluids.

In order to accomplishing reaction and mixing uniformly and efficiently in such a microscale scientific device utilizing a micro space, it is essential to cause reaction fluids to join one another in a stable state of multiple laminar flows. By precisely controlling the interfacial area and layer thickness of the uniform multiple laminar flows, uniform reaction can be accomplished while controlling molecular diffusions on interfaces.

For instance, a method by which a silver halide emulsion by using a reactor provided with a multi-coaxial nozzle formed of an inner shaft tube and an outer shaft tube introduced from a side of the inner shaft tube is proposed in Japanese Patent Application Laid-Open No. 4-139440.

Japanese Patent Application Laid-Open No. 2002-292274 proposes a circulation type micro reaction channel provided with an introductory channel which joins a cylindrical main channel from a side wall of the main channel. These Japanese Patent Application Laid-Open No. 4-139440 and No. 2002-292274 claim that reaction fluids can be joined in concentric cylindrical laminar flows.

### SUMMARY OF THE INVENTION

However, there is a problem that it is no easy task to form interfaces of multiple laminar flows precisely and stably. Thus, the pulsation of the supplied fluid due to the pulsation of the pump and the difference in channel length to the joining point invite a distribution of velocities of two fluids on the flowing fluid interface. Furthermore, a problem in fabrication accuracy (in machining and assembly) makes it difficult to make uniform concentric circles, and the pressure tends to become uneven as a result.

Further, in a reactor provided with a multi-coaxial nozzle as proposed in Japanese Patent Application Laid-Open No. 4-139440 or No. 2002-292274, especially in a device in which the outer laminar flow is supplied in a direction orthogonal to the inner laminar flow, it is difficult to form stable multiple laminar flows and to react or mix them with one another uniformly. It is also difficult to expand the range of supply flow rates or to reduce the device size.

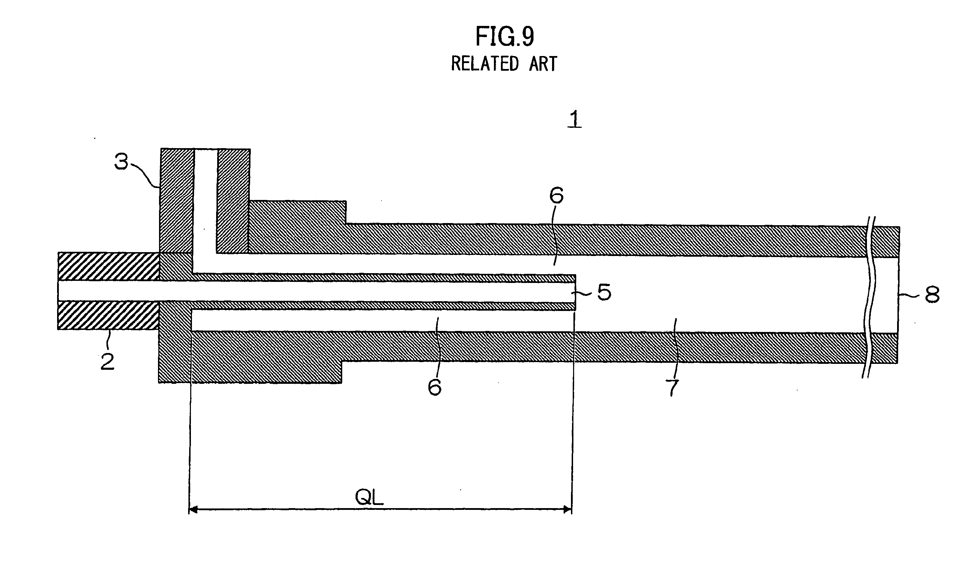

For example, Fig. 9 shows a section in the axial direction of a conventional cylindrical laminar flow type reaction device 1 to illustrate its structure. In the cylindrical laminar flow type reaction device 1 of Fig. 9, reaction fluids L1 and L2 are caused to mix or react with each other by supplying them from fluid supply piping lines 2 and 3 to fluid supply channels 5 and 6 and joining them in a reaction channel 7 and to collect the reaction product from a discharge port 8. In order to enable these reaction fluids L1 and L2 to join into a stable laminar flow in the reaction channel 7, it is necessary to rectify the circulating conditions of the reaction fluids L1 and L2 and to secure a rectifying region of or longer than a certain length (the fluid supply channel 6 of a channel length QL) before the reaction fluids L1 and L2 join each other. This means a problem of difficulty to reduce the device size.

Trying to form stable laminar flows within the device often entails limitation of the flow rate range of the fluids supplied.

An object of the present invention, attempted in view of these circumstances, is to provide a fluid manipulating method for microscale scientific devices by which a plurality of kinds of fluids can be uniformly reacted or mixed with one another in a stable multiple laminar flow state by forming laminar flows and which allows reducing the size of devices and expanding the range of applicable flow rates, and such a microscale scientific device.

In order to achieve the object stated above, a fluid manipulating method for microscale scientific devices according to a first aspect of the invention provides a fluid manipulating method for microscale scientific devices in which a plurality of fluids are mixed or reacted by supplying the plurality of fluids from a plurality of fluid supply piping lines to supply channels formed in a microscale scientific device body and joining the fluids in a single mixing/reaction channel in a laminar state, characterized in that the fluids are joined into the single mixing/reaction channel after a pressure loss of the fluid flowing therein is increased in at least one of the supply channels.

According to the first aspect, since the fluids can be rectified early by increasing the pressure loss of each, the rectifying area before the joining of the plurality of kinds of fluids can be shortened. Therefore, a plurality of kinds of fluids can be uniformly reacted or mixed with one another in a stable multiple laminar flow state, and the size of devices can be reduced with the range of applicable flow rates expanded.

According to a second aspect of the invention, the microscale scientific device body according to the first aspect has a coaxial multi-layered cylindrical structure in which the supply channels are formed in a round tubular part constituting an outer shell.

Where coaxial multi-layered cylindrical laminar flows are stably formed in this way, the invention is particularly effective.

According to a third aspect of the invention, at least one of the fluid supply piping lines for supplying the plurality of fluids according to the first or second aspect of the invention supplies the fluid in a direction not parallel to the supply channels.

In such a structure wherein the flows of fluids supplied to the mixing/reaction channel are apt to be disturbed, the invention is particularly effective. Further in the context of the third aspect, "not parallel" means a range wherein the angle to the supply channels is greater than 0°, more preferably a range of and above 90°.

According to a fourth aspect of the invention, the pressure losses of the fluids are increased by compressing a sectional area of the channel before the joining of the plurality of fluids according to any of the first through third aspects of the invention.

The fourth aspect sets forth a specific method by which the pressure losses of the fluids are increased. In the context of this fourth aspect, "compressing the sectional area of the channel" means compressing the sectional area of the circulation of the fluids with a baffle board disposed on the wall face of the channel, a honeycomb structure or a porous structure fixed within the channel, by filling the channel with beads or with an orifice for instance.

According to a fifth aspect of the invention, the fluids are rectified after the pressure losses of the fluids are increased according to any of the first through fourth aspects of the invention.

Increasing the pressure losses makes the flows slightly random, and a velocity vector in the circumferential direction (e.g. a vortex flow) may emerge. However, only by forming a long rectifying structure on the channel, this velocity vector in the circumferential direction cannot be eliminated. According to the fifth aspect of the invention, the velocity vector in the circumferential direction, such as can be efficiently eliminated. Therefore, it is made possible to join the plurality of fluids can be uniformly reacted or mixed with one another by joining them in a stable state of multiple laminar flows, and to reduce the size of devices and expand the range of applicable flow rates. It is preferable for the length of the rectifying structure in the flowing direction to be not less than 1/10 of the laminar thickness of the fluids after the pressure losses have been increased, more preferable to be not less than the laminar thickness of the fluids after the pressure losses have been increased, and even more preferable to be not less than twice the laminar thickness of the fluids after the pressure losses have been increased.

In order to achieve the object stated above, according to a sixth aspect of the invention, there is provided a microscale scientific device which mixes or reacts a plurality of fluids by supplying the plurality of fluids from fluid supply piping lines to supply channels formed in a microscale scientific device body and joining the fluids into a single mixing/reaction channel in a laminar state, characterized in that at least one of the supply channels is provided with a pressure loss increasing device for increasing the pressure loss on the supply channel.

According to the sixth aspect of the invention, it is possible to join a plurality of fluids in a state of stable multiple laminar flows and to uniformly react or mix them with one another, and further to reduce the size of devices and expand the range of applicable flow rates. Further, though a velocity vector in the circumferential direction, such as a vortex flow, cannot be eliminated only by forming a long rectifying structure on the channel, this velocity vector can be eliminated by adding the pressure loss increasing device. The pressure loss increasing device here may be a device to compress the sectional area of the channel, which may be a baffle board disposed on the wall face of the channel, a honeycomb structure or a porous structure fixed within the channel, by filling the channel with beads or with an orifice for instance. It is preferable for the circle-equivalent diameter of the mixing/reacting channel to be not more than 1 mm.

According to a seventh aspect of the invention, in the sixth aspect of the invention, at least one of the fluid supply piping lines is provided with a rectifier for rectifying the fluid after the pressure loss increasing device.

According to the seventh aspect of the invention, the flow of the fluid after the pressure loss thereof can be aligned in the flowing direction by a rectifier. Therefore, it is possible to join the plurality of fluids in a stable state of multiple laminar flows and to uniformly react or mix them with one another, and further to reduce the size of devices and expand the range of applicable flow rates.

According to the present invention, it is made possible to react or mix a plurality of kinds of fluids uniformly with one another in a stable multiple laminar flow state by forming laminar flows, reduce the size of devices and expand the range of applicable flow rates.

### BRIEF DESCRIPTION OF THE DRAWINGS

Figs. 1A and 1B are sectional views of a coaxial multi-layered cylindrical laminar flow microscale scientific device, which is a first embodiment of the invention;
Fig. 2 is a sectional view illustrating the actions of the coaxial multi-layered cylindrical laminar flow microscale scientific device of the first embodiment;
Fig. 3 is a sectional view showing a variation of the coaxial multi-layered cylindrical laminar flow microscale scientific device of the first embodiment;
Figs. 4A, 4B and 4C are sectional views showing another variation of the coaxial multi-layered cylindrical laminar flow microscale scientific device of the first embodiment;
Figs. 5A and 5B are sectional views showing still another variation of the coaxial multi-layered cylindrical laminar flow microscale scientific device of the first embodiment;
Fig. 6 is a perspective view of a flaky flow type microscale scientific device, which is a second embodiment of the invention;
Figs. 7A and 7B illustrate the configuration of a channel plate in the second embodiment of the invention;
Figs. 8A and 8B illustrate another mode of a Y-shaped channel plate in the second embodiment of the invention; and
Fig. 9 is a sectional view showing the configuration of the conventional cylindrical laminar flow type reaction device.

### DETAILED DESCRIPTION OF THE PREFERRED EMBODIMENTS

Fluid manipulating methods for microscale scientific devices and such microscale scientific device, which are preferred embodiments of the present invention, will be described below with reference to accompanying drawings.

### [First Embodiment]

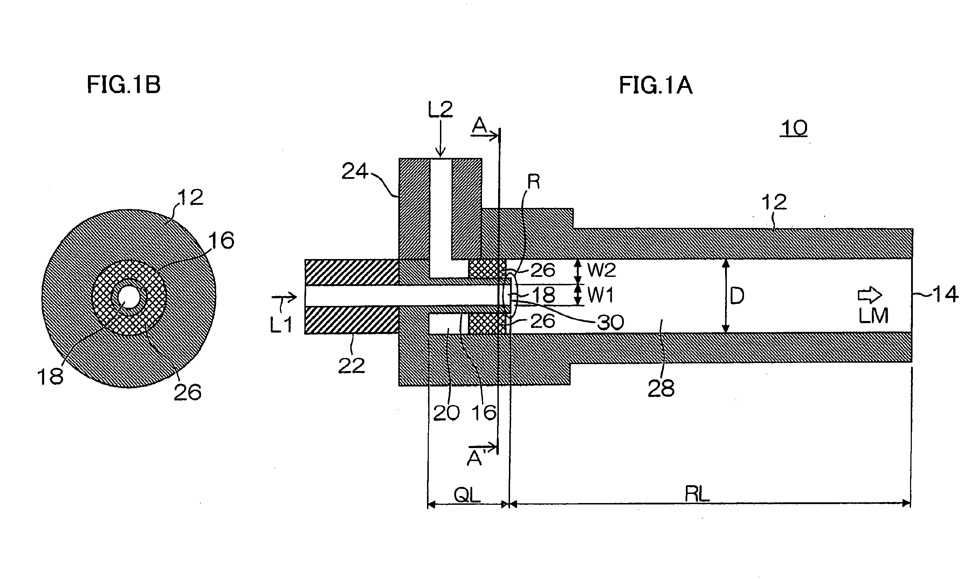

Figs. 1A and 1B are sectional views showing one example of configuration of a coaxial multi-layered cylindrical laminar flow microscale scientific device 10, which is a first preferred embodiment of the invention. Out of these figures, Fig. 1A is a section in the axial direction of the coaxial multi-layered cylindrical laminar flow microscale scientific device 10 and Fig. 1B, a section along line A-A' in Fig. 1A. The following description will refer to a case of liquid-liquid reaction between liquids L1 and L2 to generate a reaction product LM, but the invention is not limited to this case. Further, though the description will concern a case in which a single mixing/reacting channel is formed in a cylindrical shape in the coaxial multi-layered cylindrical microscale scientific device, the invention is not limited to this either.

As shown in Figs. 1A and 1B, the whole coaxial multi-layered cylindrical laminar flow microscale scientific device 10 is formed in a substantially cylindrical shape, and is provided with a cylindrically shaped round tubular part 12 which constitutes mainly the outer shell of the device.

It is preferable for the circle-equivalent diameter D of the round tubular part 12 in the radial direction to be not more than 1 mm, more preferably not more than 500 µm. In this embodiment, although an example in which the sectional shape of the coaxial multi-layered channel and the single mixing/reacting channel is circular, but this is not the only applicable shape, but the section may be rectangular or V-shape for instance.

In the tip face of the round tubular part 12, there is opened a discharge port 14 for the reaction product LM resulting from the reaction between the liquids L1 and L2.

Within the round tubular part 12, a cylindrical partition member 16 which partitions the space within the round tubular part 12 in the axial direction is disposed coaxially with the round tubular part 12, and the base end face of the partition member 16 is stuck to the round tubular part 12. The partition member 16 so partitions the space within the round tubular part 12 as to coaxially bisect its sectional circle.

Though not shown, a plurality of spacers may intervene between the inner circumferential face of the round tubular part 12 and the outer circumferential face of the partition member 16. They would serve to link and fix the partition member 16 to the round tubular part 12 and with sufficient strength and prevent it from deviating from its prescribed position or being deformed by the influences of the pressures of the liquids L 1 and L2.

The sectional circle and the space in the sectional ring shape partitioned by the partition member 16 serve as a first fluid supply channel 18 and a second fluid supply channel 20 in the sequence from the axis side. Further, fluid supply piping lines 22 and 24 for respectively supplying the liquids L1 and L2 to the first fluid supply channel 18 and the second fluid supply channel 20 of the round tubular part 12 are connected to the base end face of the round tubular part 12.

Here, in order to form the liquid L1 and the liquid L2 into stable coaxial multi-layered cylindrical laminar flows, a porous structure 26 as a pressure loss increasing device is disposed in the second fluid supply channel 20 in the region in before the liquids L1 and L2 join together. The porous structure 26 is intended to increase the pressure loss of the liquid L1 or L2 before the liquids L1 and L2 join together, and thereby rectifies them.

As such a pressure loss increasing device, a structure which compresses the sectional area of the channel (hereinafter referred to as a channel sectional area compressing structure) can be used, specific examples of which include the porous structure 26, a honeycomb structure, a mesh structure, a baffle board, filling with beads and an orifice. In this embodiment, the porous structure 26 is used as an example of channel sectional area compressing structure.

The pressure loss increasing device can be fixed to the second fluid supply channel 20 merely by filling the second fluid supply channel 20 with the device, fixing it to the channel wall face with an adhesive or the like, or using some other micro-machining technique.

The pressure loss can be controlled, where a baffle board is used as the pressure loss increasing device, by varying its shape, size, spacing, material (in terms of wettability, surface roughness and so forth) and other factors. Where a honeycomb structure is used, it can be controlled by varying its material, hole diameter, honeycomb density and other factors. Where a porous structure is used, it can be controlled by varying its gap ratio, filling volume and other factors. Where beads are used, it can be controlled by varying the bead grain size, material, filling quantity and other factors. Where an orifice is used, it can be controlled by varying its bore, material, length and other factors. The increasing extent of the pressure loss can be set as desired within a range in which the fluids can flow.

The partition member 16 between the porous structure 26 as the pressure loss increasing device and the flow joining region (region R in Fig. 1) functions as a rectifying device in the second fluid supply channel 20. It can further rectify the flows having undergone the pressure increase.

Further, the pressurized liquids L1 and L2 are supplied through the fluid supply piping lines 22 and 24 to the first and second fluid supply channels 18 and 20 from two fluid supplying devices (not shown) arranged on the upstream side of the microscale scientific device 10.

Also, the liquids L1 and L2 supplied from the first and second fluid supply channels 18 and 20 join together at farther towards the tip than the partition member 16 in the round tubular part 12, and a reaction channel 28 is formed.

As shown in Fig. 1A, first fluid supply outlets 30 opening into the reaction channel 28 from the first fluid supply channel 18 and the second fluid supply channel 20 are formed. These fluid supply outlets 30 open in a sectional ring shape along the locus of a circle centering on an axis S, and are arranged to be concentric to one another. Opening widths W1 and W2 here define the opening areas of the fluid supply outlets 30, and the initial flow velocities of the liquids L 1 and L2 introduced through the fluid supply outlets 30 into the reaction channel 28 are determined according the opening areas of these fluid supply outlets 30 and the supply quantities of the liquids L1 and L2.

In the space within the round tubular part 12 farther towards the tip than the reaction channel 28, there is formed a discharge channel over which the reaction product LM resulting from the reaction between the liquids L 1 and L2 flows towards the discharge port 14. Here, if the reaction product LM is generated by the reactions between the liquids L1 and L2, the reaction between the liquids L1 and L2 will have to be completed at the outlet in the reaction channel 28. Therefore, the length RL (see Fig. 1) of the reaction channel 28 in the flowing direction of the liquids L1 and L2 should be set to a value sufficient for the reaction between the liquids L1 and L2 to be completed. Incidentally, it is supposed that the microscale scientific device 10 is filled with no gap all the time with the liquids L1 and L2 and the reaction product LM resulting from their reaction and they are flowing towards the discharge port 14.

It is preferable for the members constituting the microscale scientific device 10 to be readily machinable, strong, resistant to corrosion and contributing to the fluidity of the input fluids. Such preferable materials include, for instance, metals (iron, aluminum, stainless steel, titanium and various others), resins (fluorine resin, acryl resin and so on), glass (quartz and the like) and ceramics (such as silicon).

Micro-machining techniques are applied to the fabrication of the microscale scientific device 10. The applicable micro-machining techniques include, for instance, the LIGA (Roentgen-Lithographie Galvanik Abformung) technique using X-ray lithography, high-aspect ratio photolithography using EPPN SU-8 (trade name), micro-electro-discharge machining (µ-EDM), high-aspect ratio machining of silicon by deep reactive ion etching (RIE), hot embossing, stereolithography, laser machining, ion beam machining and mechanical micro-cutting using micro-tools made of hard materials such as diamond. Any of these techniques can either be used by itself or in a combination of two or more. More preferable ones among these micro-machining techniques are the LIGA (Roentgen-Lithographie Galvanik Abformung) technique using X-ray lithography, high-aspect ratio photolithography using EPPN SU-8, micro-electro-discharge machining (µ-EDM) and mechanical micro-cutting.

It is desirable for elements or members to be joined by a precise method which can keep dimensional accuracy without entailing the destruction of channels or the like by the degeneration or deformation of materials by heating at high temperature, and therefore it is preferable to choose solid phase joining (such as pressure welding or diffusion bonding) or liquid phase joining (such as welding, eutectic bonding, soldering or adhesion) appropriate for the materials to be worked upon. For instance, where both silicon materials are to be joined, silicon direct bonding, where both glass materials are to be joined, fusion welding, or where both metal materials are to be joined, diffusion bonding can be used. For the joining of ceramics, some other technique than mechanical sealing which is applied to metals is required. For alumina, there is a method by which the alumina material is screen-printed with a bonding agent known as glass solder to a film thickness of around 80 µm, and subjected to thermal treatment at 440 to 500°C without being pressurized. Newly developed methods include surface activation bonding, direct bonding using a hydrogen bond and joining using an aqueous solution of hydrogen fluoride (HF).

Liquid supplying devices suitable for use in this embodiment include various micro-pumps, pulsation-free plunger pumps and syringe pumps. These liquid supplying devices are used in a system in which the first and second fluid supply channels 18 and 20 channels communicated are all filled with the liquids L1 and L2, and the supply pressures and supply flow rates of the liquids L1 and L2 supplied to the first and second fluid supply channels 18 and 20 can be stably controlled especially where pulsation-free plunger pumps or syringe pumps are used.

Fluids for use in this embodiment include liquids, gases, liquid-solid mixed phase fluids and gas-solid mixed phase fluids.

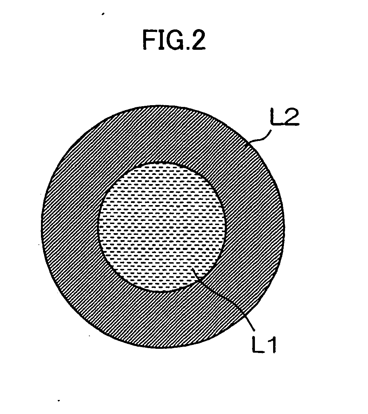

Next, the actions of the microscale scientific device 10 of this embodiment will be described. Fig. 2 schematically shows the state of a section in the radial direction of a fluid in the reaction channel 28 of the microscale scientific device 10.

First, the liquids L 1 and L2 in a pressurized state are supplied from two fluid supply sources (not shown) disposed on the upstream side of the microscale scientific device 10 through the fluid supply piping lines 22 and 24 to the first and second fluid supply channels 18 and 20.

Then, the liquid L1 flows within the first fluid supply channel 18, and the liquid L2 flows within the second fluid supply channel 20 formed on the outer circumference of the first. In this process the liquid L2, after being once increased in pressure loss by circulating through the porous structure 26 built up within the second fluid supply channel 20, is supplied into the reaction channel 28.

In this process, as the fluid condition of the liquid L2 is already rectified before the liquid L1 and the liquid L2 join, the liquids L1 and L2 can form multiple laminar flows in a coaxial multiple cylindrical shape from the axial side as shown in Fig. 2. This enables the liquids L 1 and L2 to be uniformly diffused or mixed and reacted.

As this also enables the lengths of the fluid supply channels 5 and 6 of the conventional configuration shown in Fig. 9 to be shortened, it contributes to reducing the hardware size.

In this way, the application of the present invention enables a plurality of fluids to join one another in a stable multiple laminar flow state and be thereby uniformly reacted or mixed, and further makes it possible to reduce the hardware size and expand the range of applicable flow rates.

Although the foregoing description of this embodiment referred to a case in which two liquids are reacted in the microscale scientific device 10, the invention can also be applied to cases in which more than two fluids are reacted.

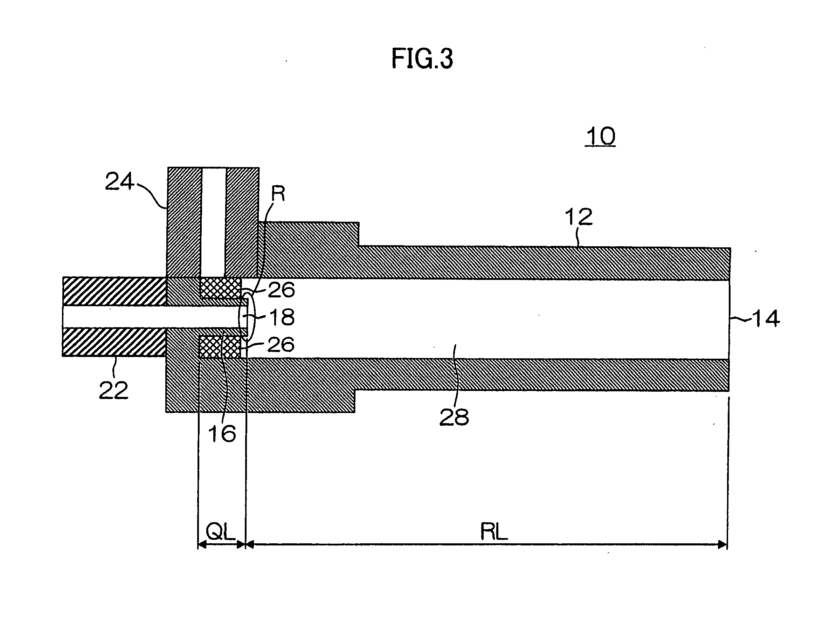

Further, the arrangement of the porous structure 26 is not limited to what is shown in Fig. 1, but may as well be arranged farther upstream of the second fluid supply channel 20 as shown in Fig. 3. By further reducing the length the second fluid supply channel 20 in this way, the device can be further downsized.

Also, though the foregoing description referred to a case in which the porous structure 26 is used as a pressure loss increasing device, this is not the only possible arrangement, but alternatively the second fluid supply channel 20 may be filled with minute beads, for instance.

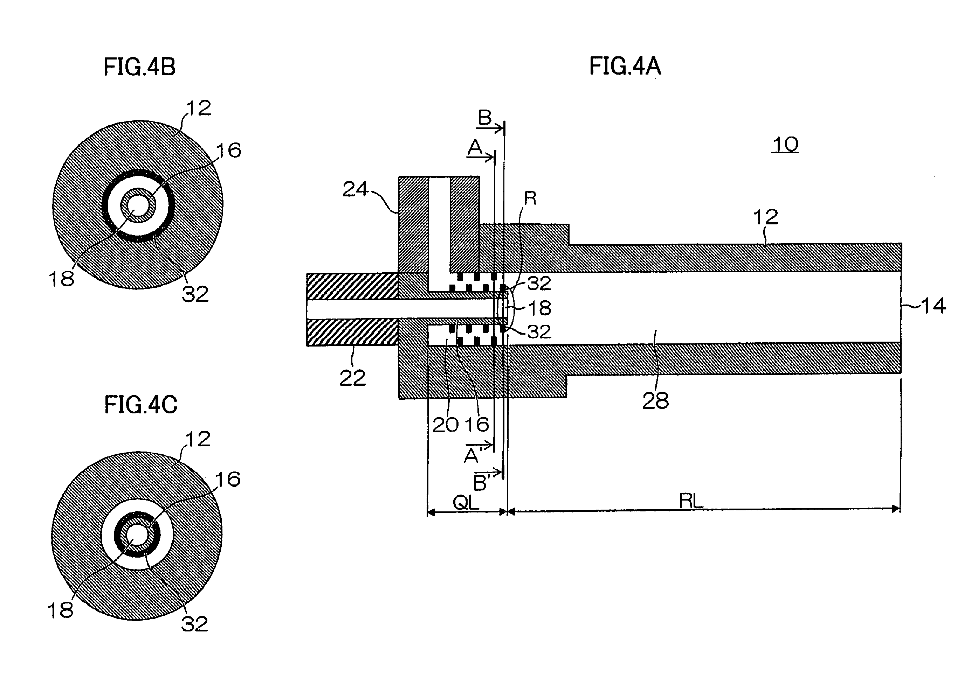

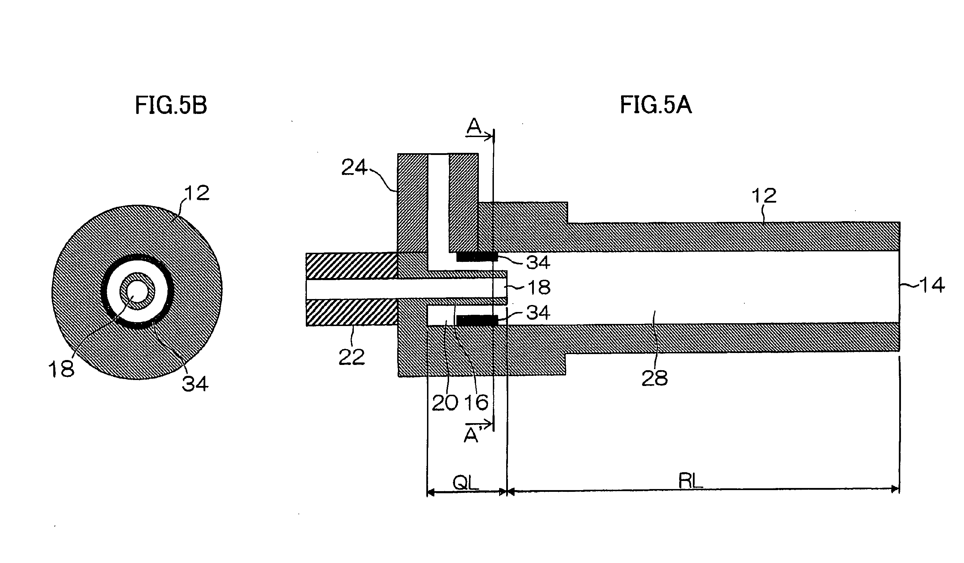

Next, variations of the coaxial multi-layered cylindrical laminar flow microscale scientific device of this embodiment will be described with reference to Figs. 4A, 4B and 4C and Figs. 5A and 5B. Out of these drawings, Fig. 4A shows a section in the axial direction; Fig. 4B, a section along line A-A'; and Fig. 4C, a section along line B-B'.

As shown in Figs. 4A, 4B and 4C, a plurality of baffle boards 32 ... may be formed on the wall faces of the second fluid supply channel 20 on the upstream side of the flow joining region (namely the outer circumferential face of the partition member 16 and the inner circumferential face of the round tubular part 12).

Or as shown in Figs. 5A and 5B, a part of the second fluid supply channel 20 on the upstream side of the flow joining region may constitute orifices 34.

Incidentally, as shown in Fig. 3 and Figs. 4A, 4B and 4C, the partition member 16 (region R in Fig. 3 and Figs. 4A, 4B and 4C) between the pressure loss increasing devices such as the porous structure 26 and the baffle boards 32 and the flow joining region functions as a rectifier in the second fluid supply channel 20. This enables the flow after the pressure loss has been increased to be further rectified.

As described so far, the pressure losses of reaction fluids flowing within the second fluid supply channel 20 via a bent channel can be increased promptly, and the plurality of fluids can be joined in the reaction channel 28 in a stable state of multiple laminar flows.

Therefore, the plurality of fluids can be joined in a stable state of multiple laminar flows and thereby reacted or mixed uniformly, and at the same time it is made possible to reduce the hardware size and expand the range of applicable flow rates. Even where the fluids are supplied in high flow rates, fluctuations of flow velocities due to sudden changes in the flowing direction can be restrained to enable multiple laminar flows to be formed.

### [Second Embodiment]

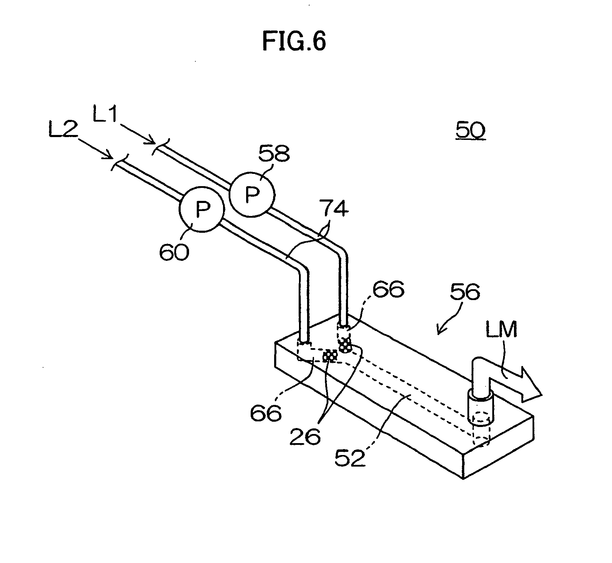

Fig. 6 is a perspective view of a microscale scientific device, which is a second preferred embodiment of the invention, an example of flaky flow type microscale scientific device 50.

In this and following drawings, members and elements having respectively the same functions as in the first embodiment are assigned the same reference symbols, and their detailed description is dispensed with. Its fluid channels described below as minute channels of 1 mm or less in width by way of example, and two kinds of liquids, liquids L1 and L2, are supposed to react with each other in the following description.

As shown in Fig. 6, the flaky flow type microscale scientific device 50 is primarily provided with a flaky fluid channel plate 56, a first fluid supply device 58 for supplying the liquid L1 to a fluid channel 52, and a second fluid supply device 60 for supplying the liquid L2 to the fluid channel 52.

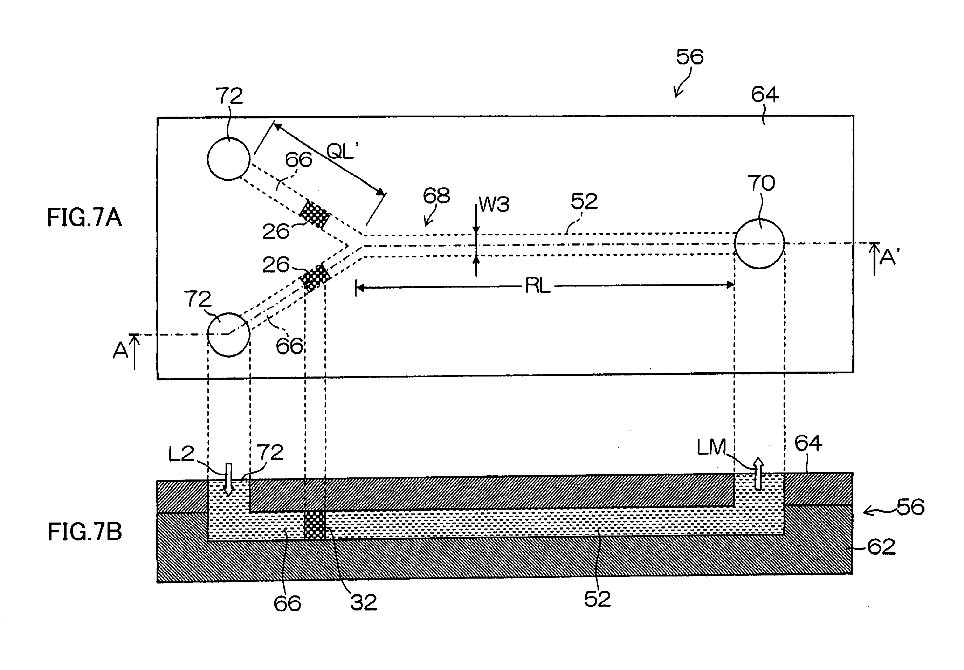

Figs. 7A and 7B illustrate the hardware body of the flaky fluid channel plate 56. Fig. 7A shows a top view and Fig. 7B, a section along line A-A' in Fig. 7A.

As shown in Figs. 7A and 7B, the flaky fluid channel plate 56 comprises a body member 62 and a lid member 64, and in the body member 62 there are formed the fluid channel 52 for causing two kinds of liquids L1 and L2 to undergo a liquid-liquid reaction and a Y-shaped fluid channel 68 comprising two fluid supply channels 66 and 66 to cause the liquids L1 and L2 to join each other to flow into the fluid channel 52. Also, at the terminal position of the fluid channel 52, there is formed a liquid discharge port 70 to discharge the product LM of the liquid-liquid reaction. On the other hand, two fluid inlets 72 and 72 are formed in the lid member 64 to let the liquids L1 and L2 into fluid supply channels 66 and 66, and a pair of fluid supply devices 58 and 60 for supplying the liquids L1 and L2 are connected to the two fluid inlets 72 and 72 via two fluid supply pipes 74 and 74 (see Fig. 6).

It is preferable for the fluid channel 52 to be a micro-channel of 1 mm (1000 µm) or less in width W3, more preferably 500 µm or less, and 1 mm or less in depth, more preferably 500 µm or less. The sectional shape of the fluid channel 52 in the radial direction usually is rectangular, but this is not the only acceptable shape. The shape may also be circular (or semicircular).

Where the configuration comprises two fluid supply channels 66 and 66, it is preferable for the width W3 of each fluid supply channel 66 to be half the width of the fluid channel 52. For instance, where the width of the fluid channel having a rectangular section in the radial direction is 500 µm and its depth is 200 µm, the width of each fluid supply channel 66 is set to 250 µm and its depth to 200 µm. The length RL' (see Figs. 7A and 7B) is set to be sufficient to enable the liquid-liquid reaction to be completed, and this length varies with the type of liquid-liquid reaction.

Further, each of the first and second fluid supply channels 66 and 66 before they join is provided with a porous structure 26 as a pressure loss increasing device. Whereas channel sectional area compressing structures similar to that in the first embodiment can be used as such pressure loss increasing devices, this second embodiment is a case in which the porous structure 26 is disposed in each of the first and second fluid supply channels 66 and 66 by way of example.

The materials and fabrication methods for the members constituting the flaky fluid channel plate 56 are the same as in the first embodiment.

The present invention will prove particularly effective in the Y-shaped fluid channel 68 to be described below.

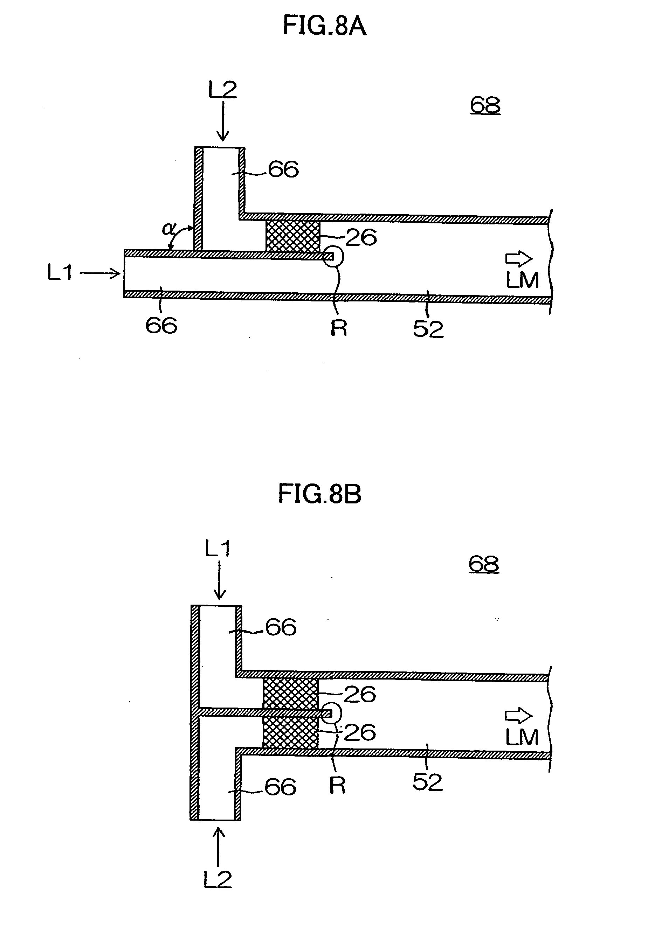

Figs. 8A and 8B illustrate another mode of the Y-shaped channel plate 68 in the flaky fluid channel plate 56 in this embodiment. Fig. 8A shows a case in which the joining angle α of the first and second fluid supply channels 66 and 66 is 90° and Fig. 8B, a case in which the joining angle α is 180°.

As shown in Fig. 8A, the inside of the second fluid supply channel 66 (the liquid L2 side) which joins at a substantially orthogonal angle the fluid channel 52 for mixing and reacting is filled with a porous structure 26. Similarly, as shown in Fig. 8B, the insides of the first and second fluid supply channels 66 and 66 are filled with porous structures 26. In this way, the invention is especially effective in a range in which the joining angle α of the fluid supply channels is greater than 0°, more preferably in a range of and above 90°.

Further, the partition members between the porous structures 26 serving as the pressure loss increasing devices and the flow joining region (region R in Figs. 8A and 8B) function as rectifiers in the first and second fluid supply channels 66 and 66. This arrangement enables the flows after the pressure losses have increased to be further rectified.

Next, the actions of the microscale scientific device 50 of this embodiment will be described.

First, the pressurized liquids L1 and L2 are supplied from the two fluid supply devices 58 and 60 disposed on the upstream side of the microscale scientific device 50 are supplied to the first and second fluid supply channels 66 and 66 through the fluid supply pipes 74 and 74.

Then, the liquids L1 and L2 flow within the fluid supply channels 66 and 66. In this process, the liquids L1 and L2 penetrate the porous structures 26 disposed in the first and second fluid supply channels 66 and 66 and, after being increased in pressure loss and rectified, are supplied into the Y-shaped channel plate 68.

As the fluid conditions of the liquids L1 and L2 are then quickly rectified before they join each other, the liquids L1 and L2 can form a stable laminar flow in the Y-shaped channel plate 68, and accordingly can be uniformly diffused or mixed and reacted. Further, the channel lengths QL of the first and second fluid supply channels 66 and 66 can be shortened.

In this way, by applying the present invention, the plurality of fluids can be joined in a stable state of multiple laminar flows and thereby reacted or mixed uniformly, and at the same time it is made possible to reduce the hardware size and expand the range of applicable flow rates. Even where the fluids are supplied in high flow rates, fluctuations of flow velocities due to sudden changes in the flowing direction can be restrained to enable multiple laminar flows to be formed.

The fluid manipulating method for microscale scientific devices and such microscale scientific devices according to the invention have hitherto been described with reference to preferred embodiments thereof, but the invention is not limited to these embodiments but can be practiced in other modes as well.

Although the porous structure 26 is provided only in the second fluid supply channel in the first embodiment, another porous structure 26 may be disposed also in the first fluid supply channel 18. This would make possible even more efficient rectification of the fluids.

Further, though only the second fluid supply piping line 24 is inserted from a side face of the round tubular part 12, the first fluid supply piping line 22 may also be inserted from a side face of the round tubular part 12. Where the fluid supply piping lines are inserted at an angle orthogonal to the axial direction of the round tubular part 12 in this way, since the fluids flowing within the fluid supply piping lines circulate in curved channels, they have to be rectified before they reach the reaction channel 28. The invention can be applied with particular effectiveness to such a case.

The present invention can be applied to various mixing and reacting apparatuses, various analyzers and fluid manipulating methods for them. For instance, the invention can be applied to particulate fabricating devices for fabricating pigment particulates, magnetic particulars and other particulates including those of various paints, inks for ink jets, toners for electro-photography and color filters, and fluid manipulating methods for such devices.

## Claims

1. A fluid manipulating method for microscale scientific devices (10, 50) in which a plurality of fluids (L1, L2) are mixed or reacted by supplying the plurality of fluids from a plurality of fluid supply piping lines (22, 24) to supply channels (18, 20, 66) formed in a microscale scientific device body and joining the fluids in a single mixing/reaction channel (28, 52) in a laminar state,
**characterized in that** the fluids (L1, L2) are joined into the single mixing/reaction channel (28, 52) after a pressure loss of the fluid flowing therein is increased in at least one of the supply channels(18, 20, 66).

2. The fluid manipulating method for microscale scientific devices (10) according to claim 1, **characterized in that** the microscale scientific device body has a coaxial multi-layered cylindrical structure (12) in which the supply channels (18, 20) are formed in a round tubular part constituting an outer shell.

3. The fluid manipulating method for microscale scientific devices (10, 50) according to claim 1 or 2, **characterized in that** at least one of the fluid supply piping lines (22, 24) for supplying the plurality of fluids (L1, L2) supplies the fluid in a direction not parallel to the supply channels.

4. The fluid manipulating method for microscale scientific devices (10, 50) according to any of claims 1 to 3, **characterized in that** the pressure losses of the fluids (L1, L2) are increased by compressing a sectional area of the channel before the joining of the plurality of fluids.

5. The fluid manipulating method for microscale scientific devices (10, 50) according to any of claims 1 to 4, **characterized in that** the fluids (L1, L2) are rectified after the pressure losses of the fluids are increased.

6. A microscale scientific device (10, 50) which mixes or reacts a plurality of fluids by supplying the plurality of fluids (L1, L2) from fluid supply piping lines (22, 24) to supply channels (18, 20, 66) formed in a microscale scientific device body and joining the fluids into a single mixing/reaction channel (28, 52) in a laminar state,
**characterized in that** at least one of the supply channels (18, 20, 66) is provided with a pressure loss increasing device (26, 32, 34) for increasing a pressure loss on the supply channel.

7. The microscale scientific device (10, 50) according to claim 6, **characterized in that** at least one of the fluid supply piping lines (22, 24) is provided with a rectifier (16, R, 26, 32, 34) for rectifying the fluid after the pressure loss increasing device (26, 32, 34).
